Europäisches Patentamt

European Patent Office

Office européen des brevets

(19)

(11) Veröffentlichungsnummer: **0 285 774 B1**

# (12) EUROPÄISCHE PATENTSCHRIFT

(45) Veröffentlichungstag der Patentschrift: 24.07.91

(51) Int. Cl.5: **B23B 51/00**

(21) Anmeldenummer: 88102219.8

(22) Anmeldetag: 16.02.88

(54) **Bohrvorrichtung zur Herstellung von Bohrlöchern mit Hinterschneidung.**

(30) Priorität: 08.04.87 DE 3711903

(43) Veröffentlichungstag der Anmeldung:
12.10.88 Patentblatt 88/41

(45) Bekanntmachung des Hinweises auf die
Patenterteilung:
24.07.91 Patentblatt 91/30

(84) Benannte Vertragsstaaten:
AT BE CH ES FR GB IT LI NL

(56) Entgegenhaltungen:
EP-A- 0 211 997
DE-C- 3 027 408
FR-A- 603 336

(73) Patentinhaber: **fischerwerke Artur Fischer
GmbH & Co. KG
Weinhalde 14 - 18
W-7244 Waldachtal 3/Tumlingen(DE)**

(72) Erfinder: **Fischer, Artur, Prof. Dr. h. c.
Weinhalde 34
W-7244 Waldachtal 3/Tumlingen(DE)**

## Beschreibung

Die Erfindung betrifft eine Vorrichtung zur Herstellung von Bohrlöchern mit Hinterschneidung gemäß der Gattung des Hauptanspruchs.

Eine solche aus der DE-PS 30 27 408 bekannte Vorrichtung ermöglicht in einfacher Weise das Herstellen von Bohrungen mit einer Hinterschneidung in der Bohrlochtiefe durch Schwenken des Bohrers bei Erreichen der gewünschten Bohrlochtiefe. Am Gehäuse der Bohrvorrichtung steht ein hülsenförmiger Zentrieransatz ab, durch den der Bohrer mit Spiel hindurchgeführt ist. Im Gehäuse der Bohrvorrichtung ist die Bohreraufnahme schwenkbar gelagert, die einen Einspannschaft für eine Schlagbohrmaschine besitzt. Die schwenkbare Lagerung der Bohreraufnahme ermöglicht es, bei Erreichen der gewünschten Bohrlochtiefe den Bohrer so zu verschwenken, daß der Bohrkopf den Bohrlochgrund kegelförmig ausreibt. In ein derart ausgebildetes Bohrloch können insbesondere Befestigungselemente eingesetzt werden, die sich im Bereich des Bohrlochgrundes aufspreizen lassen, so daß eine formschlüssige Verbindung zwischen Befestigungselement und Bohrlochwandung entsteht.

Die bekannten Bohrvorrichtungen werden insbesondere zur Erstellung von Bohrlöchern in Mauerwerk aus Beton verwendet. Der gegenüber dem Bohrerschaft im Durchmesser vergrößerte Bohrkopf ist daher einem erhöhten Verschleiß ausgesetzt, weshalb mit zunehmender Betriebsdauer der Bohrkopfdurchmesser abnimmt und somit die hergestellten Bohrlöcher einen entsprechend geringeren Durchmesser aufweisen. Der am Gehäuse der Bohrvorrichtung abstehende Zentrieransatz ist daher bei den bekannten Bohrvorrichtungen bezüglich seines Außendurchmessers an den minimalen Bohrlochdurchmesser angepaßt. Dies hat zur Folge, daß der Zentrieransatz insbesondere bei Verwendung eines neuen Bohrers, der den größten Bohrlochdurchmesser erzeugt, keine exakte Zentrierung im Bohrloch ermöglicht. Dadurch wird das Ausreiben der Hinterschneidung erschwert.

Der Erfindung liegt die Aufgabe zugrunde, eine Bohrvorrichtung zur Herstellung von Bohrlöchern mit Hinterschneidung zu schaffen, deren Zentrieransatz eine gute Zentrierung sowohl bei neuen als auch bei mehrfach gebrauchten Bohrern gewährleistet. Die Lösung dieser Aufgabe wird bei einer Bohrvorrichtung der eingangs genannten Gattung durch die im kennzeichnenden Teil des Hauptanspruchs angegebenen Merkmale erreicht. Durch die Verwendung eines kegelförmigen Bereichs am Zentrieransatz kann dieser bei geringfügig variierenden Bohrlochdurchmessern, beispielsweise bedingt durch einen reduzierten Bohrkopfdurchmesser aufgrund Abnützung, immer noch im Bohrloch zentriert werden. Im kegelförmigen Bereich kann der Außendurchmesser beispielsweise vom kleinen Durchmesser bis zum großen Durchmesser um 5 % bis 15 % zunehmen.

Um ein Festklemmen des kegelförmigen Bereichs im Bohrloch zu vermeiden, ist es besonders vorteilhaft, den kegelförmigen Bereich in über den Umfang verteilte Segmente zu unterteilen und/oder den kegelförmigen Bereich mit einer Rändelung zu versehen. Bei einem verhältnismäßig engen Bohrloch läßt sich ein derart gerändelter oder unterteilter kegelförmiger Bereich durch die Vibration der Bohrvorrichtung vollständig in das Bohrloch einführen, bis das Gehäuse der Bohrvorrichtung an der das Bohrloch umgebenden Wand anliegt. Dabei wirkt insbesondere die Rändelung einem zu starken Verpressen des Zentrieransatzes im Bohrloch entgegen, da die Rändelung mit ihrer rauhen Oberfläche in Verbindung mit den auftretenden Vibrationen den für den kegelförmigen Bereich erforderlichen Raum ausreibt. Selbst wenn ein derartiges Ausreiben im Bereich des kegelförmigen Bereichs nicht erfolgt, kann ein leichter Schlag oder Drehimpuls die Rändelung aus dem Bohrloch wieder lösen. Damit die gewünschte Hinterschneidung am Bohrlochgrund immer in exakt der dafür vorgesehenen Bohrlochtiefe liegt, muß sich beim Ausreiben der Hinterschneidung das Gehäuse der Bohrvorrichtung immer in der hierzu erforderlichen Position befinden. Außerdem sollte das Gehäuse wegen der für die Ausreibung erforderlichen Schwenkbewegung der Bohreraufnahme möglichst sicher fixiert werden können. Um diese Forderung erfüllen zu können, sieht eine Weiterbildung der Erfindung vor, daß am Gehäuse mit radialem Abstand gegenüber dem Zentrieransatz eine in Richtung Bohrkopf vorspringende Anlagefläche ausgebildet ist. Diese Anlagefläche ist vorzugsweise eine ringförmige Stirnfläche, die beim Ausreiben der Hinterschneidung an der Wand des Mauerwerks anliegt.

Der radiale Abstand zwischen der Anlagefläche und dem Zentrieransatz ist besonders vorteilhaft, da im Bereich der Bohrlochöffnung häufig Material aus dem Mauerwerk ausbricht, so daß in der unmittelbaren Umgebung der Bohrlochöffnung an der Wand keine ebene Fläche vorhanden ist. Die erfindungsgemäß vorgesehene vorspringende Anlagefläche liegt jedoch im Abstand vom Bohrloch an der Wand an, wodurch eine sichere Lagerung der Bohrvorrichtung an der Wand des Mauerwerks gewährleistet wird.

Die Erfindung wird nachfolgend anhand der Zeichnung näher erläutert.

Es zeigen:

Figur 1    die Seitenansicht einer Bohrvorrichtung und

Figur 2    den Querschnitt des Gehäuses der in Figur 1 dargestellten Bohrvorrichtung mit Zentrieransatz.

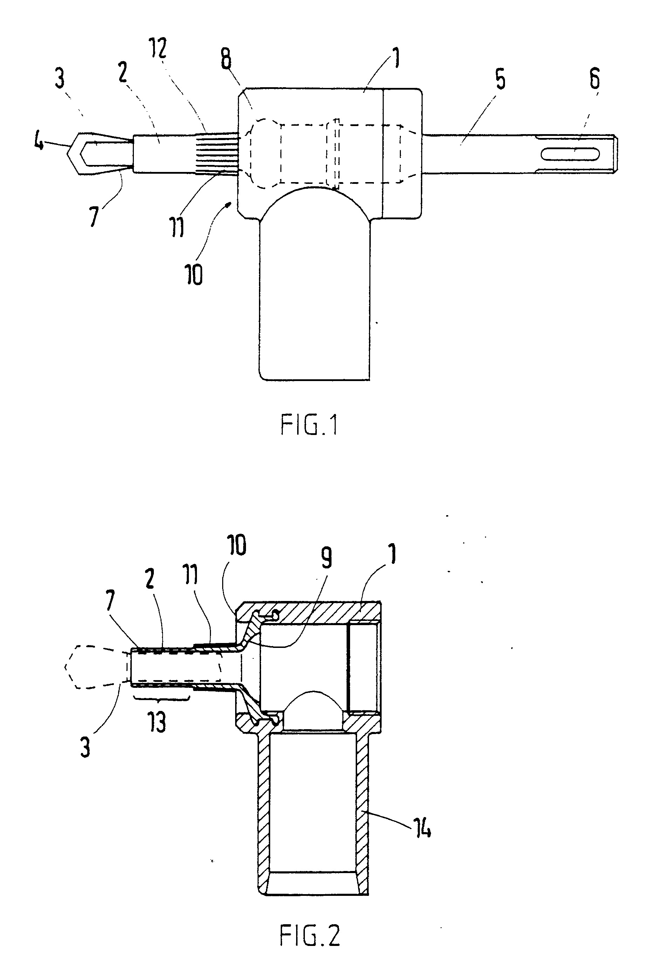

Die in Figur 1 dargestellte Bohrvorrichtung besteht aus einem Gehäuse 1, einem Zentrieransatz 2, einem Bohrer 3 mit Bohrkopf 4 und einer Bohreraufnahme 5. Die Bohreraufnahme 5 ist mit ihrem Schaft 6 in ansich bekannter Weise von einer Schlagbohrmaschine antreibbar. Der Bohrer 3 ist mit seinem Schaft 7 durch den hülsenförmigen Zentrieransatz 2 bis in das Gehäuse 1 hindurchgeführt und dort mit der Bohreraufnahme 5 verschraubt.

Die im Innern des Gehäuses 1 angeordneten Teile der Bohreraufnahme 5 und des Bohrers 3 sind mit unterbrochenen Linien dargestellt. An der Bohreraufnahme 5 ist eine Kugelfläche 8 ausgebildet, die in Verbindung mit einer entsprechend geformten Lagerfläche 9, wie sie in Figur 2 ersichtlich ist, ein Schwenklager für die Bohreraufnahme 5 bildet. Eine mögliche Ausführung eines derartigen Schwenklagers ist in der eingangs genannten vorveröffentlichten Druckschrift angegeben und ist nicht Gegenstand der vorliegenden Erfindung, weshalb diesbezüglich auf die genannte Druckschrift verwiesen wird.

In Figur 2 ist ersichtlich, daß der Zentrieransatz 2 zurückgesetzt in das Gehäuse 1 eingesetzt ist, so daß eine am Gehäuse 1 ausgebildete Anlagefläche 10 eine ringförmige Stirnfläche bildet, die einen radialen Abstand zum kegelförmig ausgebildeten Bereich 11 des Zentrieransatzes 2 hat. Der Bereich 11 ist mit einer Rändelung 12 versehen, während der übrige gerade Abschnitt 13 des Zentrieransatzes 2 eine glatte Oberfläche mit einheitlichem Außendurchmesser aufweist. Der kegelförmige Bereich 11 hat einen zum Gehäuse 1 hin zunehmenden Außendurchmesser. Der Schaft 7 des Bohrers 3 ist mit radialem Spiel durch den Zentrieransatz 2 hindurchgeführt, damit der Bohrer 3 zum Ausreiben einer Hinterscheidung im Bohrlochgrund verschwenkt werden kann.

Das Gehäuse 1 besitzt einen nach unten gerichteten röhrenförmigen Ansatz 14, an den eine Absaugeinrichtung zum Absaugen des Bohrmehls angeschlossen werden kann.

## Patentansprüche

1. Bohrvorrichtung zur Herstellung von Bohrlöchern mit Hinterschneidung, mit einem Bohrer (3) dessen Bohrkopfdurchmesser größer ist als der Durchmesser des Bohrschafts (7), mit einem am Gehäuse (1) der Bohrvorrichtung abstehenden, den Bohrschaft (7) mit Spiel umschließenden hülsenförmigen Zentrieransatz (2) und mit einer schwenkbar gelagerten Bohreraufnahme (5), die von einer Schlagbohrmaschine antreibbar ist, **dadurch gekennzeichnet,** daß der Zentrieransatz (2) an seinem dem Bohrkopf (4) abgewandten Ende einen kegelförmigen Bereich (11) hat, dessen Außendurchmesser jeweils bezogen auf eine bestimmte Bohrergröße vom durch Verschleiß entstandenen minimalen zum maximal möglichen Bohrkopfdurchmesser zum Gehäuse (1) hin zunimmt.

2. Bohrvorrichtung nach Anspruch 1, **dadurch gekennzeichnet,** daß der kegelförmige Bereich (11) eine Rändelung (12) hat.

3. Bohrvorrichtung nach einem der Ansprüche 1 oder 2, **dadurch gekennzeichnet**, daß am Gehäuse (1) mit radialem Abstand gegenüber dem Zentrieransatz (2) eine in Richtung Bohrkopf (4) vorspringende Anlagefläche (10) ausgebildet ist.

4. Bohrvorrichtung nach Anspruch 3, **dadurch gekennzeichnet**, daß die Anlagefläche (10) eine ringförmige Stirnfläche ist.

## Claims

1. Drilling apparatus for making drilled holes having an undercut, having a drill (3) of which the drilling head diameter is greater than the diameter of the drill shaft (7), having a sleeve-like centering projection (2) that projects from the housing (1) of the drilling apparatus and surrounds the drill shaft (7) with play, and having a swivel-mounted drill mounting (5) that can be driven by a percussion drill, characterised in that the centering projection (2) has on its end remote from the drilling head (4) a conical region (11) the outside diameter of which, based on the specific drill size in question, increases towards the housing (1) from the minimum drilling-head diameter, resulting from wear, to the maximum possible drilling-head diameter.

2. Drilling apparatus according to claim 1, characterised in that the conical region (11) has a ridged border (12).

3. Drilling apparatus according to claim 1 or claim 2, characterised in that an abutment surface (10) which projects in the direction towards the drilling head (4) is formed on the housing (1) radially spaced from the centering projection (2).

4. Drilling apparatus according to claim 3, characterised in that the abutment surface (10) is an annular end face.

**Revendications**

1. Dispositif pour percer des trous avec contredépouille, comprenant un foret (3) dont le diamètre de la tête (4) est plus grand que celui de sa queue (7), un embout (2) de centrage en forme de douille, qui part du boîtier (1) de ce dispositif de perçage et qui entoure cette queue (7) avec un certain jeu,et un porte-foret (5) oscillant, qui peut être entraîné par une perceuse à percussion, dispositif caractérisé en ce que l'embout (2) de centrage comporte, à son extrémité opposée à la tête (4) du foret, une partie conique (11), dont le diamètre extérieur augmente vers le boîtier, par rapport à la grosseur d'un foret respectif déterminé, d'un diamètre minimal dû à l'usure au diamètre maximal possible de la tête du foret.

2. Dispositif de perçage selon la revendication 1, caractérisé en ce que la partie conique (11) présente un moletage (12).

3. Dispositif de perçage selon l'une des revendications 1 et 2, caractérisé en ce qu'une surface (10) d'appui est formée sur le boîtier (1), à une certaine distance radiale de l'embout (2) de centrage, et en fait saillie dans la direction de la tête (4) du foret.

4. Dispositif de perçage selon la revendication 3, caractérisé en ce que la surface (10) d'appui est une surface frontale annulaire.

FIG.1

FIG.2